# EUROPEAN PATENT APPLICATION

(11) **EP 0 865 038 A1**
(43) Date of publication of application: **16.09.1998**
(21) Application number: 97830111.7
(22) Date of filing: 12.03.1997
(51) Int. Cl.: G11B 7/26, B65G 49/05, B65G 47/90, B29D 17/00

(54) **Transferring device for optical discs being processed in a disc-making machine, machine incorporating said device and transferring method put into practice thereby**

(71) Applicant: TAPEMATIC S.p.A., I-20052 Monza (Milano) (IT)
(72) Inventor: Perego, Luciano, 20050 Mezzago (Milano) (IT)
(74) Representative: Righetti, Giuseppe

(57) **Abstract**

The described transferring device operates on a machine (2) for producing optical discs (3) comprising several different work stations (7, 8, 9, 10, 11, 12) each arranged to carry out a given operation on the discs being processed. The device (1) performs a sequential transfer of each disc (3) between the different work stations (7, 8, 9, 10, 11, 12) following a path comprising two parallel advance lines, one forward advance line (n) and one backward advance line (n') respectively, which are disposed laterally on opposite sides relative to the longitudinal extension axis of a support arm (14) being part of the device (1). The support arm (14) carries a first and a second series (16, 17) of pick-up heads arranged to execute the optical disc transfer on the forward (n) and backward (n') lines during the forward and return strokes of the support arm, respectively.

## Description

The present invention relates to a transferring device for optical discs being processed in a disc-making machine, said device being of the type comprising at least one support arm, pick-up means operatively carried by the support arm and adapted to be actuated for selectively picking up and releasing at least one optical disc being processed, drive means acting on the support arm to reciprocate the arm between a first end-of-stroke or limit position and a second end-of-stroke or limit position.

The invention also relates to a machine for making optical discs incorporating said device, as well as a new optical-disc transferring method put into practice by the device in reference.

It is known that production of data-storage optical discs, of the type commercially identified by abbreviations "CD" or "DVD", involves manufacture by an injection-moulding step of a disc in the strict sense, which disc must be subsequently submitted to several different processing steps to enable reading and/or providing the disc with an appropriate protection for all data contained therein.

To this end, the semi-finished disc obtained from a moulding process is loaded on a machine provided with different work stations each of which carries out a given operation contemplated in the disc processing cycle.

For instance, discs of the type commonly referred to as "CD" are first submitted to a metallizing treatment, i.e. vacuum plating is carried out on their surface bearing the recorded data. In a subsequent step, the metallized surface is submitted to a lacquering treatment involving deposition of a protective layer of transparent plastic material thereon. The lacquered disc is then submitted to a lacquer-drying step to be afterwards transferred to an outlet station provided with a collecting magazine or other means adapted to move the finished disc away from the machine.

Often provided upstream of the outlet station is a control station performing a qualitative inspection of the finished discs and a selecting station carrying out transfer of faulty discs, if any, to an auxiliary collecting magazine.

Presently, transfer of the individual discs being processed from each work station to the subsequent one is executed by mechanical handling devices essentially comprising a support arm provided with a reciprocating motion about a vertical axis and carrying a pick-up head at its end, which head by suction-cup means or other appropriate means to be actuated pneumatically, picks the disc up from a work station and deposits it in the immediately following station.

In other embodiments, also utilized in combination with handling devices of the above described type, a turntable is provided which has circumferentially distributed seatings each adapted to engage a respective optical disc in order to submit it, as a result of successive angular rotations imparted to the turntable, to the action of different work stations disposed about the turntable itself.

From the foregoing it appears that use of many mechanical handling devices operating independently of each other to carry out transfer of the discs between two specific locations within the machine gives rise to a machine of complicated structure both because important spaces are required for housing the handling devices and enabling movement of same, and because for each handling device specific drive means is required, operation of which must take place in synchronism with all the machine members.

It is also to point out that each handling device is only utilized for half its operating cycle, since its return stroke after transferring of the disc is an idle stroke.

On the other hand, while the transferring means involving a turntable offer the possibility of interlocking different work stations to a single turntable without requiring the latter to execute idle strokes, they too are very bulky above all if the number of work stations to be associated with the a turntable is rather high. Actually, the internal areas in a turntable are practically unused.

It should be also recognized that the overall dimensions and/or the operating requirements of known transferring devices represent a hindrance in planning, in connection with the different operating stations. The main object of the present invention is substantially to overcome all problems described above by means of a transferring device showing better efficiency and at the same time a greatly simplified structure, also of reduced bulkiness and capable of offering large freedom in selecting the typology and positioning of the individual operating units intended for optical disc processing.

The above and still further objects that will become more apparent in the progress of the present description are substantially achieved by a transferring device for optical discs being processed in a disc-making machine, characterized in that said support arm is movable, upon the action of the drive means, along its own longitudinal extension axis, said pick-up means being arranged to operate on a forward advance line (n) and a backward advance or return line (n') respectively, which are defined parallelly to each other and on opposite sides relative to the longitudinal extension axis of the support arm, to transfer at least one optical disc along the forward line (n) during the forward strokes of the support arm from the first to the second limit positions, and to transfer at least one optical disc along the backward line (n') during the return strokes of the support arm from the second to the first limit positions.

Still in accordance with the present invention, this device puts into practice a transferring process for optical discs being processed in a disc-making machine, characterized in that it comprises the following steps: depositing an optical disc at a given loading location coincident with a stop position defined along a forward advance line of the optical discs; engaging the optical disc by pick-up means carried by a support arm to be operated with a reciprocating motion between a first limit position and a second limit position, in the direction of its longitudinal extension axis parallel to the forward line; moving the support arm from the first limit position to the second limit position to transfer the optical disc from the loading location to at least one stop position in alignment with the loading station, along the forward line; engaging, by the pick-up means, an optical disc arranged at an outlet end location coincident with a stop position on a backward advance or return line of the discs extending parallelly to the longitudinal extension axis of the support arm on the opposite side relative to the forward line; moving the support arm from the second limit position to the first limit position to transfer the optical disc from the outlet end location to at least one stop position in alignment with the outlet end location along the return line.

Further features and advantages will be more fully understood from the detailed description of a preferred but non-exclusive embodiment of a transferring device for optical discs being processed in a disc-making machine, as well as the machine incorporating said device, in accordance with the present invention. This description will be taken hereinafter by way of non-limiting example, with reference to the accompanying drawings, in which:
- Fig. 1 is a diagrammatic top view of a machine for making optical discs incorporating the device in accordance with the present invention;
- Fig. 2 is a fragmentary side view of a work station removably engaged in the machine framework.

With reference to the drawings, a transferring device for optical discs being processed in a disc-making machine in accordance with the present invention has been generally identified by reference numeral 1.

The device 1 is operatively mounted on a machine 2 for making optical discs 3.

The optical discs 3 being processed, coming from a moulding unit (not shown) for example, are supplied in sequence to the machine 2 by a feeding unit generally identified by 4. The feeding unit 4 essentially comprises a handling device provided with an angularly-oscillatable rotating arm 5 intended for individually picking up the discs being processed 3 from a continuous feeder 6 connected with said moulding unit for example, or from an auxiliary magazine 6a supplied with discs 3 by the handling device 5 itself during possible non-operating steps of the machine 2.

By the handling device 5 each disc 3 is laid on an appropriate support, not shown as feasible in a manner known per se, placed at a loading location "A" defined in the machine 2. The disc positioned at the loading location "A" is at an appropriate position for being picked up by the transferring device 1 to be then submitted to different processing steps by respective work stations 7, 8, 9, 10, 11, 12.

In the embodiment herein described the processing cycle of each disc 3 essentially involves employment of a metallizing station 7 arranged for coating the disc 3 surface carrying the recorded data with a thin reflective metal layer.

Operating downstream of the metallizing station 7 is a covering station 8 carrying out deposit of a transparent protective element over the metallized surface of disc 3. In the embodiment herein described where the machine 2 is intended for making optical discs of the so-called "compact disc" (CD) type, the covering station 8 is essentially comprised of a lacquering station in which said protective element is obtained by applying a layer of transparent lacquer to the disc 3. The disc 3 is then submitted to a drying station 9 adapted to enable quick drying of the previously applied lacquer so that the disc may be subsequently transferred to a control station 10 where a qualitative inspection of same takes place.

Provided downstream of the control station 10 is a selecting station 11 the function of which is either to send possible faulty discs 3 to an auxiliary collecting magazine 11a or to conveniently arrange the qualitatively-acceptable discs 3 so as to make them ready to be sent to an outlet station 12. This outlet station 12 receives the finished optical discs 3 in a collecting magazine 13 or other means known per se and adapted to enable removal of the discs from the machine 2.

In accordance with the present invention, the path taken by the optical discs 3 to be subjected to the different work stations 7, 8, 9, 10, 11, 12 disposed in the machine 2 advantageously has a forward advance line "n" and a backward advance or return line "n'" parallel to and separated from each other, preferably of rectilinear extension. Along each of the forward and backward lines "n", "n'" the optical discs 3 are moved step by step, each step being confined between two stop positions "A, B, C, D, E, F, G, A', B', C', D'", placed at a given distance from each other along the advance line.

In more detail, the advance line "n" comprises, in the embodiment shown, seven stop positions "A, B, C, D, E, F, G", the first of which, i.e. position "A", is coincident with the loading location at which the individual discs 3 are laid down upon the action of the handling device 5.

The second advance line "n'" in turn comprises four stop positions denoted by "A', B', C' and D'", respectively.

As better specified in the following, each of the work stations 7, 8, 9, 10, 11, 12 is adapted to operate on the disc 3 arranged at one of said stop positions, to submit it to the corresponding processing step.

All that being stated, the device 1 comprises a support arm 14 having its longitudinal axis parallel to the forward "n" and "backward "n'" lines.

Associated with the support arm 14 is drive means comprising a driving toothed belt 15a for example, which is driven by a stepping motor 15, for operation of the support arm with a reciprocating motion along its longitudinal extension axis, between a first and a second limit positions spaced apart from each other by a distance corresponding to that between two consecutive stop positions "A, B, C, D, E, F, G, A', B', C', D'".

The support arm 14 is provided with pick-up means preferably comprising a plurality of pick-up heads 16, 17 equidistant from each other by an extent corresponding to the stroke performed by the support arm 14 between the first and second limit positions. In more detail, a first series 16 and a second series 17 of said pick-up heads is provided and they laterally face each other with respect to the longitudinal extension axis of the support arm 14 so that they operate on the forward line "n" and backward line "n'", respectively. In the embodiment shown, mounted on the support arm 14 are six pick-up heads 16a, 16b, 16c, 16d, 16e, 16f forming the first head series operating on the forward line "n", and three pick-up heads 17a, 17b, 17c forming the second head series operating on the return line "n'". In conclusion, each pick-up head 16a, 16b, 16c, 16d, 16e, 16f, 17a, 17b, 17c alternately operates between two stop positions "A, B, C, D, E, F, G, A', B', C', D'" disposed consecutively in side by side relation to transfer the individual discs 3 being processed from one position to the other .

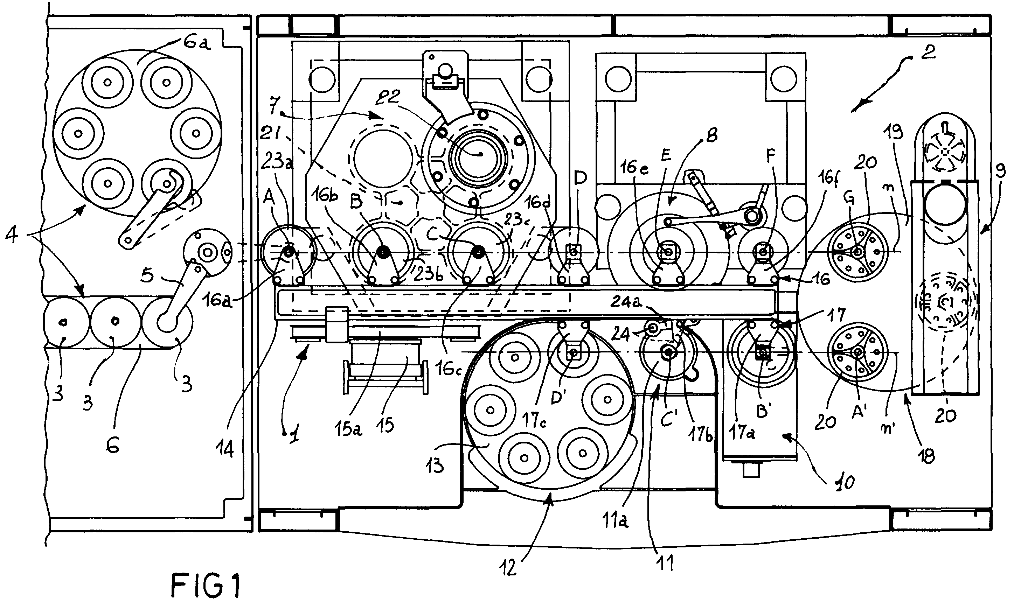

Each of the pick-up heads 16a, 16b, 16c, 16d, 16e, 16f, 17a, 17b, 17c is movable perpendicularly to the longitudinal movement direction of the support arm 14 (at right angles to the extension plane in Fig. 1) between a first and a second operating positions to pick up the disc 3 from one of the stop positions "A, B, C, D, E, F, G, A', B', C' and D'" and deposit it to the following stop position.

Still in a manner known per se, and therefore not shown in detail, each pick-up head 16a, 16b, 16c, 16d, 16e 16f, 17a, 17b, 17c has one or more suction-cup elements that are pneumatically actuated to engage and efficiently hold the respective optical disc 3.

According to a preferential feature of the present invention, the pick-up heads 16a, 16b, 16c, 16d, 16e, 16f, 17a, 17b, 17c can be operated individually and independently of each other, both in connection with the pneumatic actuation of the suction-cup elements and in connection with their movement in a direction perpendicular to the support arm 14. This expedient appears to be useful for achieving a greater flexibility of use of the device 1 and, more generally, for easily and readily adapting the machine 2 to different processing typologies for different optical discs.

In accordance with a further feature of the present invention, operating close to at least one end of the support arm 14 and preferably at the arm end opposite to the loading location "A" is transferring means 18 carrying out displacement of each optical disc 3 to transfer it from the forward line "n" to the return line "n'". This transferring means 18 essentially comprises a turntable 19 carrying at least two rest elements 20 intended for supporting respective optical discs 3 at an inlet end location placed along the forward line "n" and coincident with the seventh stop position "G", and at an outlet end location coincident with the first stop position "A'" and placed along the backward line "n'", respectively. Preferably, also disposed on turntable 19 is a third rest element 20, spaced apart by an angle of 120° from the other rest elements which are placed at the inlet "G" and outlet A''' end locations. The third rest element 20 is positioned at an auxiliary work station adapted to carry out a predetermined operation on each optical disc 3. In the preferred embodiment herein illustrated, the auxiliary work station is embodied by the above mentioned drying station 9.

Turntable 19, in known manner and therefore not further described in detail, can be angularly rotated step by step, in synchronism with the reciprocating motion of the support arm 14, to cyclically interchange the rest elements 20 placed at the inlet end location "G" and outlet end location "A'".

Under this situation, the sequential rotation of turntable 19 is controlled by angular steps of 120°, so that each rest element 20, and consequently the disc 3 laid thereon, is sequentially disposed at a position coincident with the inlet end location "G" of the drying station 9 (or any other auxiliary stations) and with the outlet end location "A'".

For the sake of clarity, the whole operating cycle of the device 1 and machine 2 for carrying out the processing steps of an optical disc 3 is now described, starting from the loading location "A" until the outlet station 12.

After the disc 3 being processed has been placed at the loading location "A" by the handling device 5, the support arm 14 is brought to the first limit stroke, as shown in Fig. 1. The first head 16a belonging to the first head series 16 is lowered towards the first operating position to engage the optical disc 3 by pneumatic actuation of the suction-cup elements associated therewith. The first head 16a is then brought to the second operating position and, by the subsequent displacement of the support arm 14 to the second limit position, the optical disc 3 removed from the loading location "A" is brought to the second stop position "B" at which there is an entrance opening for introduction of the disc into the metallizing station 7. By lowering the first head 16a towards the respective second operating position, the optical disc 3 is introduced into the metallizing station 7, within which a rotating conveyor 21 carries out transfer of the disc under a metallizing cathode 22.

In a subsequent step the rotating conveyor 21 carries the metallized disc 3 close to an exit opening coincident with a third stop position, denoted by "C", for drawing the disc out of the metallizing station 7. It is to point out that transfer of the optical disc 3 from the entrance opening to the exit opening of the metallizing station 7 takes place following successive steps, concurrently with each of which a backward-and-forward-movement cycle of the support arm 14 occurs, which results in the deposit of a new disc in the entrance opening and removal of the metallized disc from the exit opening.

The optical disc 3 disposed at the exit opening of the metallizing unit 7 is adapted to be picked up by a third pick-up head 16c to be transferred onto a parking support, not shown as feasible in known manner, placed at the fourth stop position "D".

Since the metallizing station 7 is arranged to operate under a vacuum, at least one closing element 23a, 23b, 23c is disposed on at least one of the pick-up heads 16a, 16b, 16c interacting with the metallizing station itself. Said closing element is adapted to sealingly close the above mentioned entrance and/or exit openings. In the embodiment shown each of the first, second and third pick-up heads of the first series 16a, 16b, 16c is provided to be equipped with a respective closing element 23a, 23b, 23c.

It is to be noted that in the above described example the second head 16b does not interact with disc 3 for carrying out transfer of same from the second stop position "B" to the third stop position "C", in that said transfer is directly performed within the metallizing unit 7. The second head 16b therefore only performs the function of tightly closing the entrance and exit openings of the metallizing unit 7 in an alternate manner, by means of the closing element 23b. The second head 16b too can be however equipped with respective suction-cup elements to be pneumatically actuated for meeting particular requirements, above all for enabling different operating cycles of the device 1 and/or adaptation of the device to metallizing stations of a typology different from the described one.

A fourth pick-up head 16d belonging to the first series picks the disc 3 up from the support arranged in the fourth stop position "D" to transfer it to the covering station 8, coincident with a fifth stop position "E". In the example shown where the machine is intended for producing the so-called "compact discs", the covering station 8 coats the metallized surface of disc 3 with a lacquer layer. The covering station 8 and the applied covering element can take a different nature, should the machine be intended for making optical discs of a different type, such as digital video discs (DVD) for example, where the covering element consists of a further neutral disc or a disc carrying respective data too.

The disc treated in the covering station 8 is picked up by a fifth pick-up head 16e transferring it to another fixed supporting element (not shown) located at the sixth stop position "F". A sixth pick-up head 16f transfers the optical disc 3 from the sixth stop position "F" to the seventh stop position "G" coincident with the inlet end location combined with the transferring means 18.

Through rotation of the turntable 19 by two consecutive steps, the disc is subjected to the drying station 9 to be then sent to the outlet end location coincident with the first stop location "A'" placed on the outlet line "n'".

The disc 3 is then removed therefrom by a first pick-up head 17a belonging to the second series, to be transferred to the control station 10 operating at the second stop position "B'" on the backward line "n'". The disc 3 is afterwards transferred to the selecting station 11, disposed at the third stop position "C'" by a second pick-up head 17b (only partly shown) belonging to the second series.

Operating in the selecting station 11 is selecting means that, depending on signals received from the control station 10, causes the disc 3 to be selectively transferred to the auxiliary magazine 11a or arranged so as to be removed by a third pick-up head 17c being part of the second series 17. To this end the selecting means essentially comprises an auxiliary supporting element 24, quite similar in structure to the supports arranged at the fourth "F" and sixth "D" stop positions on the forward line "n" and mounted to the end of an arm 24a oscillating about a vertical axis upon command of a fluid-operated actuator (not shown). The auxiliary supporting element 24 is selectively disposed at a receiving position (shown in chain line) where it is positioned in correspondence with the third stop position "C'" on the backward line "n'" to receive the optical disc 3 transferred to this stop position by the second head 17b belonging to the second series, or at a discarding position (shown in solid line) in which the auxiliary supporting element 24 is laterally moved apart from the third stop position "C'" and the auxiliary magazine 11a.

When the auxiliary supporting element 24 is at the discarding position, the optical disc 3 released by the second pick-up head 17b at the third stop position "C'" falls into the auxiliary collecting magazine 11a. This collecting magazine 11a is known per se and it preferably comprises a rod-like element disposed vertically in alignment with the third stop position "C'" on the backward line "n'", so that it can receive the discarded discs in an orderly manner by engaging them at their central hole.

The qualitatively-accepted disc 3, held by the auxiliary supporting element 24 at the third stop position "C'" is transferred to the fourth stop position "D'" on the backward line "n'" to be released in the outlet station 12 by the third pick-up head 17c belonging to the second series 17.

The transferring device 1 in accordance with the present invention enables a rational and advantageous placement of the individual work stations 7, 8, 9, 10, 11, 12 along the advance path followed by the discs 3 being processed in the machine 2. In particular, due to the fact that the advance path followed by the discs is essentially defined by two parallel lines covering a forward stroke "n" and a backward stroke "n'", said discs are kept within a very reduced space approximately extending along the longitudinal centre line of the machine 2, most of the work stations 7, 8, 9, 10, 11, 12 being lined up on respectively opposite sides relative to the advance path, at positions disposed consecutively in side by side relation.

This type of placement is advantageous for the purpose of reducing bulkiness and makes it easy to intervene on the individual work stations for servicing and/or replacement.

It is also to note that since the path follows two parallel forward "n" and backward "n'" lines, the work time of the transferring device 1 can be optimized by eliminating dead time due to idle strokes, which idle strokes are required by the devices in accordance with the known art. Actually, advancing of the discs in opposite directions on distinct forward "n" and backward "n'" lines causes the discs disposed on the forward line "n" to be transferred from a stop position to the next stop position during the forward strokes of the support arm from the first to the second limit positions, whereas transferring of the discs 3 placed on the backward line "n'" is carried out during the return stroke of the support arm from the second to the first limit positions. In conclusion, any dead time is eliminated in the operating cycle of the device 1.

In accordance with a further aspect of the present invention that can be also considered independently of the use of the above described transferring device 1, at least one of the work stations 7, 8, 9, 10, 11, 12 is mounted on an auxiliary framework 7a, 8a removably associated with the framework 2a being part of the machine 2. In the example herein described, this feature has been highlighted referring in particular to the metallizing and covering stations, 7 and 8 respectively, the auxiliary frameworks of which are identified by 7a and 8a, respectively.

However, the same construction concept can be adopted for any other work stations 9, 10, 11, 12.

Positioning and fastening means 25 is preferably interposed between the auxiliary framework 7a, 8a of each work station 7, 8 and the machine framework 2a. Said means is adapted to enable removable locking of the respective work station 7, 8 to a predetermined position, so that the work station may operate in a correct manner on the discs 3 moving along the machine 2.

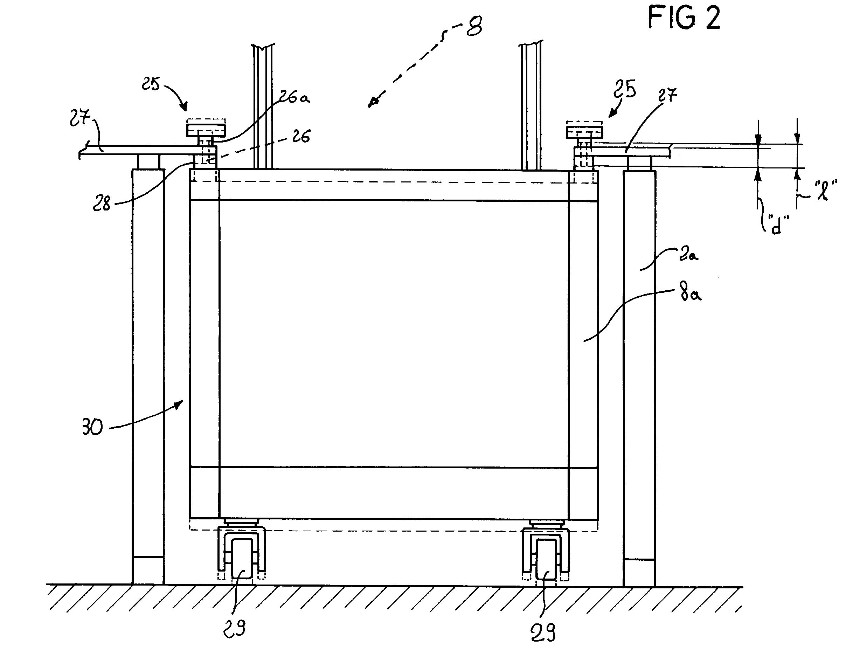

Fig. 2 shows how the positioning and fastening means 25 associated with the covering station 8 (not shown in detail) can be embodied.

In a preferential solution, the positioning and fastening means 25 comprises a plurality of threaded tie rods 26 each of which is rotatably engaged in a fixed plate 27 carried by the framework 2a. Arranged on the auxiliary framework 8a of the work station 8 are counter-plates 28 provided with threaded housings to be operatively engaged by the tie rods 26. The auxiliary framework 8a, preferably movable on slide rollers 29, can be inserted into a respective space 30 arranged on purpose in the machine framework 2a. When the auxiliary framework 8a rests on the ground by means of the slide rollers 29, the upper surfaces of counter-plates 28 are spaced apart from the respective fixed plates 27 by a distance "d" lower than the length "l" of the threaded tie rods 26, as measured between the tie rod end and an abutment shoulder 26a carried by the tie rod for getting in contact with the fixed plate 27 by axial interference. Therefore, when counter-plate 28 is positioned under the respective fixed plate 27, the threaded tie rod 26 stays slightly raised, its end being in abutment against the end of the threaded housing of counter-plate 28. Shoulder 26a therefore is slightly spaced apart from the fixed plate as shown by chain line in Fig. 2. Under this situation, the threaded tie rod 26 can be easily screwed down in the threaded housing of counter-plate 28 until its shoulder 26a is brought in abutment against the fixed plate 27. Following further screwing, the tie rod 26 action causes raising of the whole work station 8 until the counter-plate 28 is brought in abutment on the fixed plate 27, thereby giving rise to a perfect alignment in the horizontal plane between the work station 8 and the remaining parts of the machine 2.

Therefore, this solution enables removal of the individual work stations 7, 8 to be carried out very easily, for servicing and/or replacement.

It should be recognized that due to interchangeability of the work stations, important advantages are achieved in terms of flexibility of use of the machine 2, making the machine adapted for processing optical discs of different typologies. For example, if a covering station 8 is employed which is adapted to deposit a lacquer layer for accomplishment of "compact discs", this station can be easily interchanged with a station intended for feeding rigid covering discs, in order to adapt the machine 2 for production of digital video discs (DVD). The covering discs can be also directly fed by a moulding unit arranged sideways of the machine 2, or by a machine identical with that in reference set up for supplying covering discs treated with a reflective metal layer, for making optical discs to be read on both faces (DVD10).

## Claims

1. A transferring device for optical discs being processed in a disc-making machine, comprising:
- at least one support arm (14),
- pick-up means (16, 17) operatively carried by the support arm (14) and adapted to be actuated for selectively picking up and releasing at least one optical disc (3) being processed;
- drive means (15) acting on the support arm (14) to reciprocate said arm between a first end-of-stroke or limit position and a second end-of-stroke or limit position,
characterized in that said support arm (14) is movable, upon the action of the drive means (15), along its own longitudinal extension axis,
said pick-up means (16, 17) being arranged to operate on a forward advance line (n) and a backward advance or return line (n') respectively, which are defined parallelly to each other and on opposite sides relative to the longitudinal extension axis of the support arm, to transfer at least one optical disc (3) along the forward line (n) during the forward strokes of the support arm (14) from the first to the second limit positions, and to transfer at least one optical disc (3) along the backward line (n') during the return strokes of the support arm from the second to the first limit positions.

2. A device according to claim 1, characterized in that said pick-up means comprises a plurality of pick-up heads (16, 17) mounted to the support arm (14) and each arranged to alternately operate between two stop positions (A, B, C, D, E, F, G, A', B', C', D') disposed consecutively in side by side relation to transfer the disc being processed from one position to the other.

3. A device according to claim 2, characterized in that said pick-up heads (16a, 16b, 16c, 16d, 16e, 16f, 17a, 17b, 17c) are individually movable perpendicularly to the longitudinal movement direction of the support arm (14) to pick up the disc (3) from a stop position (A, B, C, D, E, F, G, A', B', C', D') and lay it down at a next stop position.

4. A device according to claim 2, characterized in that the pick-up heads (16a, 16b, 16c, 16d, 16e, 16f, 17a, 17b, 17c) can be actuated pneumatically independently of each other for engagement and release of the disc (3) being processed.

5. A device according to claim 2, characterized in that the pick-up heads (16a, 16b, 16c, 16d, 16e, 16f, 17a, 17b, 17c) are spaced apart the same distance by an extent equivalent to the stroke performed by the support arm (14) between the first and second limit positions.

6. A device according to claim 2, characterized in that it comprises a first (16) and a second (17) series of pick-up heads laterally mounted on the support arm (14) at mutually opposite positions relative to the longitudinal extension axis of the arm and adapted to operate on the forward line (n) and backward line (n'), respectively.

7. A device according to claim 2, characterized in that at least one of said pick-up heads (16a, 16b, 16c, 16d, 16e, 16f, 17a, 17b, 17c) deposits the optical disc (3) on a parking support located at one of said stop positions (A, B, C, D, E, F, G, A', B', C', D').

8. A device according to claim 1, characterized in that close to at least one end of the support arm (14) there is transferring means (18) to move the optical disc (3) from an inlet end location placed in correspondence with one of the stop positions (G) on the forward line (n) to an outlet end location placed in correspondence with one of the stop positions (A') on the backward line (n').

9. A device according to claim 8, characterized in that said transferring means (18) comprises a turntable (19) carrying at least two rest elements (20) for the optical discs (3) disposed in correspondence with said inlet and outlet end locations, which turntable (19) can be driven in angular rotation to interchange the rest elements (20) placed at the inlet end location and outlet end location, respectively.

10. A device according to claim 9, characterized in that the turntable (19) is comprised of at least three rest elements (20), two of which are placed in correspondence with said inlet and outlet end locations and at least one of which is placed in correspondence with an auxiliary work station (9), said turntable (19) being movable for interchanging the mutual position of the rest elements (20).

11. A machine for producing data-storage optical discs, comprising:
- a feeding unit (4) to individually bring the semifinished optical discs (3) to a loading location (A);
- a plurality of work stations (7, 8, 9, 10, 11) each adapted to carry out a predetermined operating step included in the optical disc processing cycle,
- an outlet station (12) to receive the finished optical discs,
- a transferring device (1) to individually transfer the optical discs (3) being processed from the loading location (A) to the outlet station (12) through the work stations (7, 8, 9, 10, 11), characterized in that said transferring device (1) comprises:
- a support arm (14),
- drive means (15) acting on the support arm (14) to reciprocate said arm along its longitudinal extension axis between a first end-of-stroke or limit position to a second end-of-stroke or limit position,
- pick-up means (16, 17) operatively carried by the support arm (14) and adapted to be actuated for selectively picking up and releasing at least one optical disc (3) being processed, said pick-up means (16, 17) being arranged to operate on a forward advance line (n) and a backward advance or return line (n') respectively, which are defined parallelly to each other and on opposite sides relative to the longitudinal extension axis of the support arm, to transfer at least one optical disc (3) along the forward line (n) during the forward strokes of the support arm (14) from the first to the second limit positions, and to transfer at least one optical disc (3) along the backward line (n') during the return strokes of the support arm from the second to the first limit positions.

12. A machine according to claim 11, characterized in that said work stations comprise:
- a metallizing station (7) to apply a metal layer to at least one surface of the semifinished optical discs (3), a covering unit (8) to apply a covering element to the metallized disc surface, and a drying unit (9) operating downstream of the covering unit (8).

13. A machine according to claim 12, characterized in that the work stations further comprise a qualitative control station (10) for inspection of the finished discs and a selecting station (11) operating downstream of the control station (10) to send the faulty discs to a collecting magazine (11a).

14. A machine according to claim 13, characterized in that the selecting station (11) comprises selecting means (24, 24a) to selectively send the optical disc (3) to the collecting magazine (11a) or arrange said disc (3) for transfer to the outlet station (12), upon the action of the pick-up means (17c).

15. A machine according to claim 14, characterized in that the selecting means comprises an auxiliary supporting element (24), mounted to an oscillating arm (24a) selectively movable between an operating position in which it engages the disc released in the selecting station for supporting it over the collecting magazine (11a) and an inoperative position in which it is laterally moved away from the collecting magazine.

16. A machine according to claim 11, characterized in that at least one of said work stations (7, 8) is mounted to an auxiliary framework (7a, 8a) removably associated with the machine framework (2a).

17. A machine according to claim 16, characterized in that it comprises positioning and fastening means (25) operating between the auxiliary framework (7a, 8a) and the machine framework (2a) to removable lock the respective work station (7, 8) according to a predetermined positioning.

18. A machine according to claim 17, characterized in that the positioning and fastening means (25) comprises threaded tie rods (26) each of which is rotatably engaged in a fixed plate (27) carried by the machine framework (2a) and operating into threaded housings arranged into counter-plates (28) carried by the auxiliary framework (8a) of the work station (8) to keep the latter raised from the ground, the counter-plates (28) being in abutment relation against the fixed plates (27).

19. A machine according to claim 18, characterized in that the threaded tie rods (26) have a greater length (l) than the distance (d) between the upper surfaces of the fixed plates (27) and the upper surfaces of the counter-plates (28), when the auxiliary framework (8a) rests on the ground.

20. A machine according to claim 18, characterized in that the auxiliary framework is provided with slide rollers.

21. A process for handling optical discs being processed in a disc-making machine, comprising the following steps:
- depositing an optical disc (3) at a given loading location (A) coincident with a stop position defined along a forward advance line (n) of the optical discs (3);
- engaging the optical disc (3) by pick-up means (16a, 16b, 16c, 16d, 16e, 16f, 17a, 17b, 17c) carried by a support arm (14) to be operated with a reciprocating motion between a first limit position and a second limit position, in the direction of its longitudinal extension axis parallel to the forward line (n);
- moving the support arm (14) from the first limit position to the second limit position to transfer the optical disc (3) from the loading location (A) to at least one stop position (B) in alignment with the loading station (A), along the forward line (n);
- engaging, by the pick-up means (16a, 16b, 16c, 16d, 16e, 16f, 17a, 17b, 17c), an optical disc (3) arranged at an outlet end location coincident with a stop position (A') on a backward advance or return line (n') of the discs (3) extending parallelly to the longitudinal extension axis of the support arm (14) on the opposite side relative to the forward line (n);
- moving the support arm (14) from the second limit position to the first limit position to transfer the optical disc (3) from the outlet end location (A') to at least one stop position (B') in alignment with the outlet end location along the return line (n').

22. A process according to claim 21, further comprising the step of displacing the optical disc (3) from the forward line (n) to the outlet end location placed on the backward line (n').

23. A process according to claim 21, in which transfer of the optical disc (3) along each of said forward (n) and backward (n') lines takes place sequentially step by step, each step being confined between two consecutive stop positions (A, B, C, D, E, F, G, A', B', C', D').
